# EUROPÄISCHE PATENTSCHRIFT

(11) **EP 3 762 175 B1**
(45) Veröffentlichungstag und Bekanntmachung des Hinweises auf die Patenterteilung: **30.08.2023**
(21) Anmeldenummer: 19712121.3
(22) Anmeldetag: 22.02.2019
(51) Int. Cl.: B23K 20/12

(54) **VORRICHTUNG UND VERFAHREN ZUR VERMEIDUNG EINER UNTERBRECHUNG DES SCHWEISS - PROZESSES BEIM RÜHRREIBSCHWEISSEN, INSBESONDERE EINES BRUCHS DES REIBSTIFTS**
DEVICE AND METHOD FOR AVOIDING AN INTERRUPTION IN THE WELDING PROCESS DURING FRICTION STIR WELDING, IN PARTICULAR BREAKAGE OF THE FRICTION PIN
DISPOSITIF ET PROCÉDÉ SERVANT À ÉVITER UNE INTERRUPTION DU PROCESSUS DE SOUDAGE LORS DU SOUDAGE PAR AGITATION-FRICTION, EN PARTICULIER UNE RUPTURE DE LA TIGE DE FRICTION

(30) Priorität: 06.03.2018 DE 102018001774
(43) Veröffentlichungstag der Anmeldung: 13.01.2021
(73) Patentinhaber: Grenzebach Maschinenbau GmbH, 86663 Asbach-Bäumenheim (DE)
(72) Erfinder: WEIGL, Markus, 86609 Donauwörth (DE)
(74) Vertreter: Kindermann, Peter
(86) Internationale Anmeldenummer: PCT/DE2019/000044
(87) Internationale Veröffentlichungsnummer: WO 2019/170182

(56) Entgegenhaltungen:
- EP-A1- 2 965 858
- DE-A1-102006 045 523
- DE-B3-102014 005 315

## Beschreibung

Anfang der neunziger Jahre des vorigen Jahrhunderts wurde das Rührreibschwei-βen oder auch Reibrührschweißen genannt, entwickelt. Das Rührreibschweißen wird unter anderem für das Schweißen von Aluminiumlegierungen mittlerweile in vielen Industriebereichen erfolgreich eingesetzt.

Die Anwendungen reichen hierbei von Einzelstücken und Kleinserien bis hin zu größeren Serien. Zum wirtschaftlichen Erfolg tragen neben der hervorragenden Güte der Schweißnaht auch die hohe Reproduzierbarkeit und die geringen Vorbereitungsarbeiten und Aufwendungen zur Nachbearbeitung bei.

Beim Rührreibschweißen wird im Fügebereich der zu verbindenden Materialien mittels der Reibung zwischen einem rotierenden, gleichzeitig translatorisch bewegten und mit Druck aufgebrachten, Werkzeug Reibungswärme erzeugt. Das Werkzeug wird entlang des Fügebereichs bewegt und verrührt das plastifizierte Material im inneren der Naht der zu verbindenden, aneinander anstoßenden Materialien. Der aufgebrachte Druck presst das plastifizierte Material zusammen. Am Ende der erzeugten Schweißnaht wird das Werkzeug aus dem Verbindungsbereich herausgezogen und die Schweißnaht ist unmittelbar belastbar.

Aus der von der Anmelderin stammenden und die Basis für den Oberbegriff des Patentanspruchs 1 bildenden Druckschrift DE 10 2014 005 315 B3 ist eine Vorrichtung zur Vermeidung einer Unterbrechung des Schweiß-Prozesses beim Rührreibschwei-βen, insbesondere eines Bruchs des Reibstifts, bekannt, mit a) einer keilförmigen Werkzeugglocke, einem Werkzeug-Aufnahmekegel, einem Schweißschuh, einem Schweißpin und zumindest einem Sensor zur Bestimmung von Kraft, Druck und Weg, wobei die Werkzeugglocke den Schweißpin mittels des Werkzeug-Aufnahmekegels und des Schweißschuhs führt, b) einer Kegel-Tallierung im unteren Bereich des Werkzeug-Aufnahme-Kegels, die der Aufnahme eines Sensors zur Erfassung der Axialkraft, des Drehmoments und des Biegemoments an dem Schweißpin dient, c) einer Piezo-Vertikalverstellung für den Schweißpin, d) einem Sensor-Signalverstärker mit einer Rotor-Antenne zum Empfang, zur Verstärkung und zur Weiterleitung aller erfassten Messwerte, wobei diese Messwerte von einer statischen Antenne an eine Maschinensteuerung weitergeleitet werden, und e) einem induktiven Stromversorgungs-System zur Versorgung des Mess-Systems aus einer sich bewegenden sekundären Wicklung und einer stehenden primären Wicklung.

Aus der Druckschrift EP 2 965 858 A1 ist weiterhin eine Vorrichtung und ein Verfahren zur Echtzeit-Erkennung eines Reibstift-Bruchs in einem Rührreibschweißverfahren bekannt, wobei unter Verwendung eines am Spindelkopf befestigten Beschleunigungssensors Beschleunigungswerte erfasst und ausgewertet werden, um eine Beschädigung einer Schweißschulter zu verhindern.

Ferner offenbart die Druckschrift DE 10 2006 045 523 A1 einen Reibrührschweißkopf sowie ein Verfahren zur Steuerung desselben, wobei eine genaue Messung des Abstands der Schweißstiftspitze zur Werkstückauflage mittels zwei Laserentfernungsmessern durchgeführt wird.

Der Erfindung liegt daher die Aufgabe zugrunde, eine Vorrichtung und ein Verfahren zur Vermeidung einer Unterbrechung des Schweiß-Prozesses beim Rührreibschweißen zu schaffen, wobei eine Verformung des Reibstifts während des Prozesses sicher und einfach erfasst und insbesondere ein Bruch des Reibstifts vermieden werden kann.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 5 gelöst.

In den Unteransprüchen sind vorteilhafte Ausgestaltungen der Erfindung gekennzeichnet.

Die erfindungsgemäße Vorrichtung wir im Folgenden näher beschreiben:
Es zeigen im Einzelnen:
- Fig.1:: eine Seitenansicht einer Anlage zum Rührreibschweißen
- Fig.2:: eine Seitenansicht der erfindungsgemäßen Werkzeugglocke 28
- Fig.3:: eine Schnittdarstellung der erfindungsgemäß verwendeten Sensoren
- Fig.4:: Übersicht über die Abnutzung des Schweißpins
- Fig.5:: Übersicht über die Zeitspannen bis zum Bruch des Schweißpins
- Fig.6:: Darstellung der Abrieb-Situation am Fügepartner 13

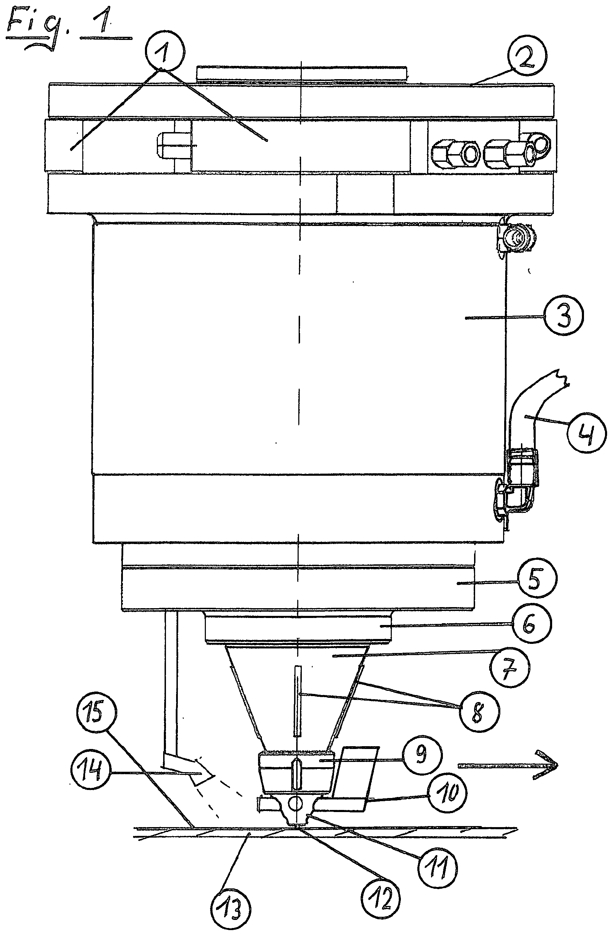

Die Fig.1: zeigt eine Seitenansicht einer Ansicht zum Rührreibschweißen.

Mit 1 ist hier jeweils ein Sensor zum Messen des Drucks zwischen einem Befestigungsflansch 2 und einem Antrieb 3 für die Drehung des Getriebes und eines Werkzeugs 3 bezeichnet. Auf der Seite des Antriebs 3 ist die Steuerleitung für den gesamten Reibschweißkopf mit 4 bezeichnet. An der Unterseite des Antriebs 3 ist eine Befestigungsplatte 5 für den Werkzeugglocken - Flansch 6 zu sehen.der die Werkzeugglocke 6 trägt.

Um die Bewegung der Werkzeugglocke 6 messtechnisch erfassen zu können sind am Umfang der Werkzeugglocke 6 in regelmäßigen Abständen in Längsrichtung befestigte Dehnungs - Messstreifen 8 mit Temperaturkompensation angebracht. Dies dient dem Zweck, den beim Schweißen auftretenden Temperaturveränderungen im DNS - Bereich und damit einer Signalverschiebung, entgegenzuwirken. Eine Überwurfmutter 9 hält die Werkzeugglocke 7 auf der Zentralachse des Reibschweißkopfs.

Die Pinspitze 12 ist im Schweißschuh 11 geführt. Zur Messung des Abstands zwischen dem Scheißschuh 11 und der Pinspitze 12 dient der gezeigte Laser - Messsensor 10.

Die an den Fügepartnern 13 aufgebrachte Schweißnaht 15 wird von einer Kamera 14 für die Schweißnaht - Kontrolle beobachtet.

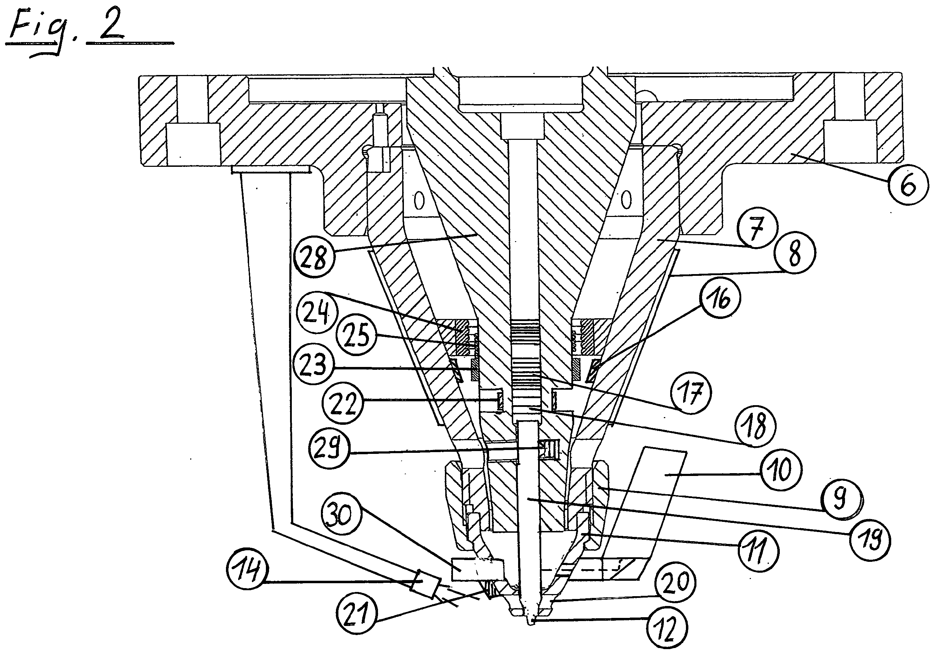

Die Fig.2 zeigt eine Seitenansicht einer erfindungsgemäßen Werkzeugglocke 28.

Der Werkzeugglocken - Flansch 6 ist hier mit seiner Verbindung zur Werkzeugglocke 7 im Detail zu erkennen, wobei im Schnitt auf beiden Seiten der Werkzeugglocke 7 die aus der Fig.1 bekannten Sensoren 8 in der Form von Dehnungs - Messstreifen zu sehen sind. In der zentralen Achse der Werkzeugglocke 7 ist der Schweißpin 19 gelagert der auf der Höhe der statischen Antenne 16 eine Einrichtung 17 zur Piezo - Vertikalverstellung für den Schweißpin 19 aufweist. Darunter gelagert wird mittels eines Sensors 18 der auf den Schweißpin 19 wirkende Betriebsdruck gemessen.

Der im selben Bereich in der gezeigten Querschnitts - Verengung des, den Schweißpin führenden Werkzeug - Aufnahmekegels 28, installierte Sensor 22 dient der Messung der an dieser Stelle angreifenden Axialkraft, des Drehmoments und des Biegemoments.

Die Signalübertragung der von dem Sensor 22 ermittelten Messwerte erfolgt über einen, mit dem Werkzeug - Aufnahmekegel 28 drehbaren Signalverstärker 23 und eine Rohrantenne.

Der Empfang und die Weiterleitung der von dem Sensor 22 ermittelten Messwerte erfolgt über eine statisch fest stehende Antenne 16.

Zur Stromversorgung der beschriebenen Mess - Systeme dient eine induktive Stromversorgung , deren statische, primäre Wicklung mit 24 und deren bewegliche, sekundäre, Wicklung mit 25 bezeichnet ist.

Im Bereich der Pinspitze 12 sind Öffnungen 20 für den Materialabfluss des Schmauchs der Fügepartner am Schweißpin 19 vorgesehen, sowie ein Sensor 21 zur Messung zur Messung des Materialabflusses der Fügepartner.

Der den Schweißpin 19 führende Schweißschuh 11 wird von einer Überwurfmutter 9 gehalten.

Die Kamera 14 dient der Registrierung und Aufzeichnung der Vorgänge beim Schweißvorgang.

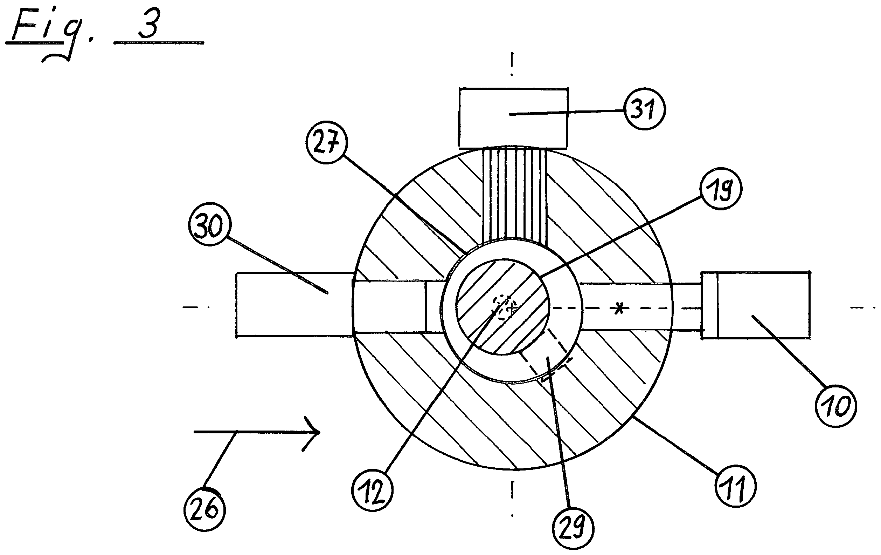

Im Bereich des oberen Endes der Überwurfmutter 9 ist neben der Pinspitze 12 ein Körper - Schallsensor 29, der mit seiner Richtwirkung in den Bereich zwischen den Schweißpin 19 und den Schweißschuh 11 gerichtet ist, installiert. Hierzu wird auf die Fig.3 verwiesen.

Gegenüber dem Laser - Meßsensor 10 ist ein Luft - Schallsensor 30 angeordnet. Auch hier wird hinsichtlich der genauen Lage auf die Fig.3 verwiesen.

Der Wirbelstrom - Sensor 31 kann zur Messung kleinster Distanzen verwendet werden. Vorteilhaft ist seine Anordnung quer zur Schweißrichtung.

Die Fig.3 zeigt eine Schnittdarstellung in der Ebene des Laser - Meß - Sensors 10 und des Luft - Schallsensors 30.

Hier wird gezeigt, wie eine Abweichung des Schweißpins 19 mit seiner Pinspitze 12 aus seiner normalen Mittellage innerhalb des Rundlochs 27 im Schweißschuh 11 mittels des gezeigten Laser - Meßsensors 10 und des gegenüber angeordneten Luft - Schallsensors 30 detektiert und genau vermessen werden kann.

Zusätzlich wirken der, aus der Fig.2 bekannte Wirbelstrom - Sensor 31 und der Körper - Schallsensor 29 in dem gezeigten Spalt zwischen dem Schweißpin 19 und dem inneren Rand des Schweißschuhs 11.

Der Richtungspfeil 26 gibt die Richtung der Bewegung des Schweißpins 19 an.

In einer besonderen Ausbauform ist ein besonderer, nicht näher bezeichneter, Schweißchuh - Temperatursensor vorgesehen. Immerhin kommt es im Falle einer vollständigen Anlage des drehenden Pins an die Schulterbohrung ( worst case - Fall) zu einer Temperatursteigerung von etwa 100 Grad C. Das ist eine deutliche Erhöhung der Temperatur im Vergleich zum eigentlichen Schweißvorgang.

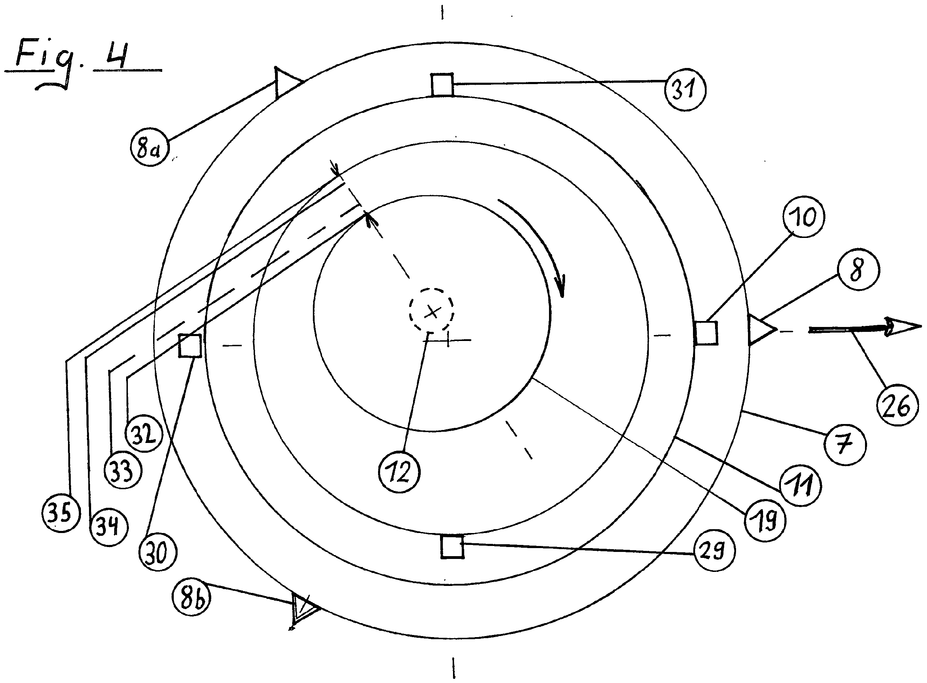

Die Fig.4 : zeigt eine Übersicht über die Abnutzung des Schweißpins bis zu einem Bruch des Schweißpins.

Die gezeigten konzentrischen Kreise stellen, von außen nach innen betrachtet, den Rand der Werkzeugglocke 7, die äußere Begrenzung des Schweißschuhs 11 und die folgende, nicht näher bezeichnete, innere Begrenzung des Schweißschuhs 11 dar. Am Umfang der äußeren Begrenzung des Schweißschuhs 11 ist in der

Bewegungsrichtung des mit einem nach rechts gerichteten Pfeil 26 ein Sensor 8 bezeichnet. Diese insgesamt am Umfang der Werkzeugglocke 7 verteilten Sensoren 8 sind auch der Fig.1 und der Fig.2 zu entnehmen. Die, in der Fig.4 gezeigten weiteren Sensoren 8a und 8b sind hier als ein hinterer linker Sensor und ein hinterer rechter Sensor bezeichnet.

An der inneren Begrenzungslinie des Schweißschuhs 11 ist der aus der Fig.3 bekannte Körper - Schallsensor 29 skizziert, während an der äußeren Begrenzung des Schweißschuhs 11 der ebenfalls aus der Fig.3 bekannte Wirbelstrom - Sensor 31 zu erkennen ist und links und rechts auf einer horizontalen Linie der Luftschall - Sensor 30 und der Laser - Meßsensor 10 dargestellt sind.

Exzentrisch zu den beschriebenen Kreis ist der Schweißpin 19 mit seiner Pinspitze 12 mit verschiedenen Abstandslinien dargestellt, wobei die Linie 33 die Ideallinie des Abstands des Schweißpins 19 zur inneren Begrenzungslinie des Schweißschuhs 11, die so genannte Spaltzone, darstellt.

Mit 32 und 35 sind die Begrenzungslinien der Spaltzone dargestellt und mit 34 beginnt der kritische Bereich, der zu einem Bruch des Schweißpins 19 führen kann.

Der kürzeste Abstand zwischen dem Schweißpin 19 und dem Schweißschuh 11 wird als Wirkzone dargestellt. In diesem Bereich herrscht die höchste Reibung zwischen der inneren Begrenzung des Schweißschus 11 und dem Schweißschuh 19. Dieser Abstand ist abhängig von der Vorschubgeschwindigkeit ( Pfeil 26 ) des Reibschweißkopfs und der Drehzahl des Schweißpins 19.

Die hierbei seitlich auftretenden Kräfte werden über die Werkzeugglocke bzw. der an ihr befestigten Sensoren 8, 8a und 8b detektiert.

Mit den folgenden Sensoren werden die weiter auftretenden Kräfte gemessen:
1. Mit dem Laser - Meßsensor 10 wird der Abstand des Schweißpin 19 zur Schweißschulter gemessen.
2. Mit dem Körper - Schallsensor 29 werden die Schwingungen im Schweißpin 19 gemessen.
3. Mit dem Luft - Schallsensor 30 werden die Schwingungen im Schweißschuh 11 und an der Werkzeugglocke 7 gemessen.
4. Mit dem Wirbelstrom - Sensor 31 wird die Material - Richtung in dem Spalt zwischen der Begrenzung 32 und 35 gemessen.

Die Idedeallinie, bei dem die Pinspitze 12 die höchste Standzeit erreicht, wird mit der Linie 33 erreicht. Sie bedeutet das Optimum zwischen optimalem Vorschub und der Drehzahl des Werkzeugs.

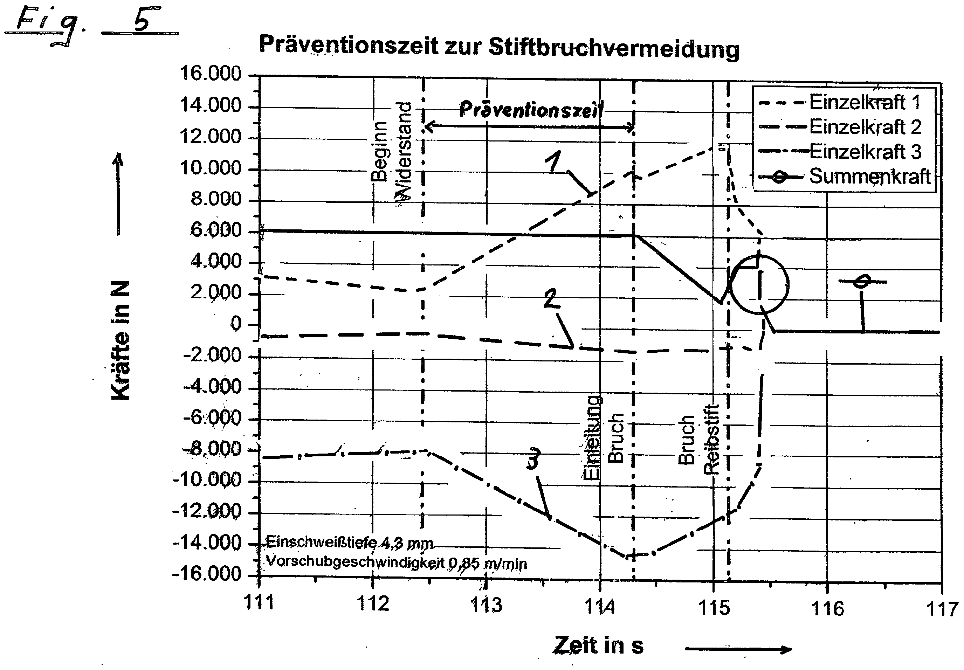

Fig.5: zeigt eine Übersicht über die Zeitspannen bis zum Bruch des Schweißpins.

Auf der Ordinate der Fig. 5 ist in der positiven und in der negativen Richtung der Verlauf von drei verschiedenen Einzelkräften die an der Pinspitze auftreten, in Abhängigkeit von der Zeit dargestellt.

Die Einschweißtiefe beträgt 4,3 mm und die Vorschubgeschwindigkeit der Pinspitze beträgt 0,85 m/min.

Der Beginn des messbaren Widerstand der Pinspitze ist in der linken Markierungslinie zu sehen, nach ca.1,7 Sekunden endet die Präventionszeit und bis zu einem Bruch vergehen dann noch einmal ca. 0,8 Sekunden.

In dieser Zeitspanne kann die Maschinenregelung für Entlastung sorgen, wodurch eine elastische "Rückfederung" des Pins erreicht wird. Es tritt also keine nachteilige Schädigung auf.

Danach, nach diesem Zeitraum tritt dann ein bleibender Schaden auf.

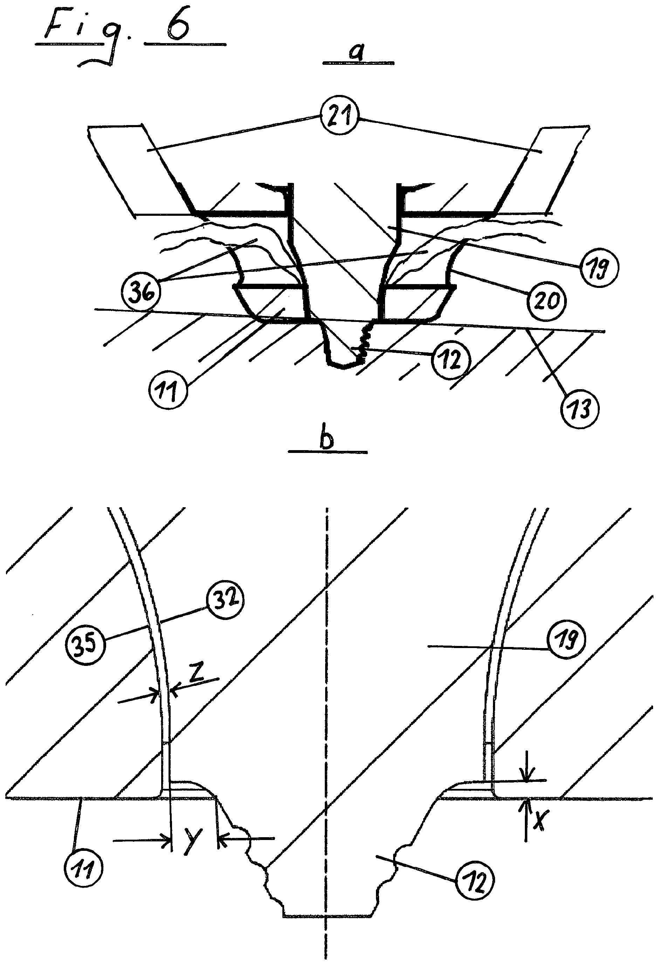

Fig.6 zeigt eine Darstellung der Abrieb - Situation am Fügepartner 13.

In Fig.6a ist im Querschnitt der Schweißschuh 11 mit der Pinspitze 12 und dem Schweißpin 19 in der Mitte über, bzw. in, dem Fügepartner 13 zu sehen, wobei zwei gegenüber liegende Teile des Sensors 21 den an den Öffnungen 20 den Abrieb 36 ( Menge, Stärke und Geschwindigkeit ) des am Schweißpin 19 austretenden Schmauchs detektieren.

Die Fig.6b zeigt die Pinspitze 12 des Schweißpins 19 im Schweißschuh 11 .

Die dargestellte Spaltzone 32 ( vgl Fig 3 ) der pinseitigen Begrenzung und die Spaltzone 35 der schweißschuhseitigen Begrenzung definieren den Abstand Z, d.h. maximal 0,8 mm. In dieser Breite kann der Abrieb 36 abfließen.

Das Maß X ist das Maß, mit dem die Restschulter in den Schweißschuh 11 eintauchen kann.

Die Restschulter Y ist von Bedeutung, damit das zu verschweißende Material die nötige Temperatur erhält, um genügend Plastizität zu bekommen um durch den Spalt Z strömen zu können. Bei zu niedriger Temperatur entsteht ein Stau und der Pinschaft 19 wird beschädigt.

Das Maß X (0,01 bis 0,1 mm) wird jeweils entsprechend dem Material ( Legierung ) eingestellt. Die Restschulter erzeugt Wärme, die auch Einfluss auf den Glättvorgang durch den Schweißschuh 11 auf die fertige Schweißnaht hat.

### Bezugszeichenliste

- 1: Sensor zum Druckmessen zwischen dem Flansch 2 und dem Antrieb 3
- 2: Befestigungsflansch für einen Roboterarm oder eine Portalbrücke
- 3: Antrieb mit Getriebe für das Werkzeug
- 4: Steuerleitung für den Reibschweißkopf
- 5: Befestigungsplatte für den Werkzeugglocken - Flansch
- 6: Werkzeugglocken - Flansch
- 7: Werkzeugglocke
- 8: Sensor an der Werkzeugglocke 7 (Dehnungs - Meßstreifen ) 8a: hinterer linker Sensor. 8b: hinterer rechter Sensor
- 9: Überwurfmutter
- 10: Laser - Messsensor des Abstands von Schweißpin und Schweißschuh
- 11: Schweißschuh
- 12: Pinspitze
- 13: Fügepartner
- 14: Kamera für die Schweißnaht - Kontrolle
- 15: Schweißnaht
- 16: Statische Antenne
- 17: Piezo - Vertikalverstellung für den Schweißpin 19
- 18: Sensor für die Messung des Vertikaldrucks des Schweißpins 19
- 19: Schweißpin
- 20: Öffnungen für den Materialabfluss des Schmauchs der Fügepartner am Schweißpin 19
- 21: Sensor zur Messung des Materialabflusses der Fügepartner
- 22: Sensor für den Werkzeug - Aufnahme - Kegel ( beispielsweise DMS )
- 23: Sensor - Signalverstärker und Rotor - Antenne
- 24: induktive Stromversorgung, sekundäre Wicklung
- 25: induktive Stromversorgung, primäre Wicklung
- 26: Richtung der Bewegung des Schweißpins
- 27: Rundloch für den Durchtritt des Schhweißpins 26 im Schweißschuh 11
- 28: Werkzeug - Aufnahmekegel
- 29: Körper - Schallsensor
- 30: Luft - Schallsensor
- 31: Wirbelstrom - Sensor
- 32: Begrenzung der Spaltzone auf der Seite des Schweißpins 19
- 33: Ideallinie des Abstands des Schweißpins 19 zum Schweißschuh 11
- 34: Beginn des kritischen Bereichs der Spaltzone
- 35: Begrenzung der Spaltzone auf der Seite des Schweißschuhs 11
- 36: Materialabrieb des Fügepartners 13

## Patentansprüche

1. Vorrichtung zur Vermeidung einer Unterbrechung des Schweiß-Prozesses beim Rührreibschweißen, insbesondere eines Bruchs des Reibstifts, mit
a) einer keilförmigen Werkzeugglocke (7), einem Werkzeug-Aufnahmekegel (28), einem Schweißschuh (11) und einem Schweißpin (19), wobei die Werkzeugglocke (7) den Schweißpin (19) mittels des Werkzeug-Aufnahmekegels (28) und des Schweißschuhs (11) führt,
b) einer Kegel-Tallierung im unteren Bereich des Werkzeug-Aufnahme-Kegels (28), die der Aufnahme eines Sensors (22) zur Erfassung der Axialkraft, des Drehmoments und des Biegemoments an dem Schweißpin (19) dient,
c) einer Piezo-Vertikalverstellung für den Schweißpin (19),
d) einem Sensor-Signalverstärker (23) mit einer Rotor-Antenne zum Empfang, zur Verstärkung und zur Weiterleitung aller erfassten Messwerte, wobei diese Messwerte von einer statischen Antenne (16) an eine Maschinensteuerung weitergeleitet werden, und
e) einem induktiven Stromversorgungs-System zur Versorgung des Mess-Systems aus einer sich bewegenden sekundären Wicklung (24) und einer stehenden primären Wicklung (25), **dadurch gekennzeichnet, dass** mindestens drei im Winkel von 120 Grad zueinander ausgerichtete streifenförmige Sensoren (8) zur Bestimmung von Kraft, Druck und Weg an den Längsseiten der keilförmigen Werkzeugglocke (7) angeordnet sind und ein Laser-Meßsensor (10) im Bereich des Schweißschuhs (11) angeordnet ist, dessen Richtwirkung ein den Schweißpin (19) aufnehmendes Rundloch (27) im Durchtrittsbereich der Pinspitze (12) überstreicht, wobei ein Luftschallsensor (30) dem Laser-Meßsensor (10) gegenüber angeordnet ist und ein Schweißschuh-Temperatursensor vorgesehen ist.

2. Vorrichtung nach Anspruch 1, **dadurch gekennzeichnet,**
**dass** im Bereich des oberen Endes einer Überwurfmutter (9), welche die Werkzeugglocke (7) auf der Zentralachse des Reischweißkopfs hält, ein Körper-Schallsensor (29), der mit seiner Richtwirkung in den Bereich zwischen den Schweißpin (19) und den Schweißschuh (11) gerichtet ist, installiert ist.

3. Vorrichtung nach einem der vorhergehenden Ansprüche, **dadurch gekennzeichnet,**
**dass** ein Wirbelstrom-Sensor (31) zur Messung einer Distanz zwischen dem Schweißpin (19) und dem inneren Rand des Schweißschuhs (11) verwendet wird, wobei dieser quer zur Schweißrichtung angeordnet ist.

4. Vorrichtung nach einem der vorhergehenden Ansprüche, **gekennzeichnet durch**,
einen Temperatursensor zur Erfassung der Temperatur des Schweißschuhs (11).

5. Verfahren zur Vermeidung einer Unterbrechung des Schweiß-Prozesses beim Rührreibschweißen, insbesondere eines Bruchs des Reibstifts, mit einer Vorrichtung nach einem der Ansprüche 1 bis 4 und mit den folgenden Schritten:
a) Bestimmung von Kraft, Druck und Weg der sich drehenden und den Schweißpin (19) führenden Werkzeugglocke (7) mittels der streifenförmigen Sensoren (8),
b) Erfassung der Axialkraft, des Drehmoments und des Biegemoments an dem Schweißpin (19) mittels des an der Kegel-Tallierung im unteren Bereich des Werkzeug-Aufnahme-Kegels (28) angeordneten Sensors (22), und
c) Erfassung der Verbiegung und der Temperatur des Schweißpins (19),
wobei
in Abhängigkeit von einer jeweiligen Einzelkraft an der Schweißpinspitze (12) und innerhalb einer vorbestimmten Zeitspanne eine Maschinenregelung für eine Entlastung des Schweißpins (19) sorgt, wodurch eine elastische Rückfederung des Schweißpins (19) erreicht wird.

## Claims

1. Device for avoiding an interruption in the welding process during friction stir welding, in particular breakage of the friction pin, comprising:
a) a wedge-shaped tool dome (7), a tool receiving cone (28), a welding shoe (11) and a welding pin (19), wherein the tool dome (7) guides the welding pin (19) by means of the tool receiving cone (28) and the welding shoe (11),
b) a cone constriction in the lower region of the tool receiving cone (28), which is used to receive a sensor (22) for detecting the axial force, the torque and the bending moment at the welding pin (19),
c) a piezoelectric vertical adjustment for the welding pin (19),
d) a sensor signal amplifier (23) having a rotor antenna for receiving, amplifying and forwarding all the detected measured values, these measured values being forwarded to a machine controller by a static antenna (16), and
e) an inductive power supply system for supplying the measuring system from a moving secondary winding (24) and a stationary primary winding (25),
**characterized in that**
at least three strip-like sensors (8) for determining force, pressure and travel are arranged at an angle of 120 degrees to one another on the longitudinal sides of the wedge-shaped tool dome (7), and a laser measuring sensor (10) is arranged in the region of the welding shoe (11), the directional action of which sweeps over a round hole (27) receiving the welding pin (19) in the passage region of the pin tip (12), wherein an airborne sound sensor (30) is arranged opposite the laser measuring sensor (10), and a welding shoe temperature sensor is provided.

2. Device according to Claim 1, **characterized in that** a structure-borne sound sensor (29), which is directed with its directional action into the region between the welding pin (19) and the welding shoe (11), is installed in the region of the upper end of a union nut (9) which holds the tool dome (7) on the central axis of the friction welding head.

3. Device according to one of the preceding claims, **characterized in that**
an eddy current sensor (31) is used to measure a distance between the welding pin (19) and the inner edge of the welding shoe (11), this sensor being arranged transversely with respect to the welding direction.

4. Device according to one of the preceding claims, **characterized by**
a temperature sensor for detecting the temperature of the welding shoe (11).

5. Method for avoiding an interruption of the welding process during friction stir welding, in particular breakage of the friction pin, with a device according to one of Claims 1 to 4 and having the following steps:
a) determining force, pressure and travel of the rotating tool dome (7) guiding the welding pin (19), by means of the strip-like sensors (8),
b) detecting the axial force, the torque and the bending moment at the welding pin (19) by means of the sensor (22) arranged on the cone constriction in the lower region of the tool receiving cone (28), and
c) detecting the bending and the temperature of the welding pin (19),
wherein
depending on a respective individual force at the welding pin tip (12) and within a predetermined time interval, machine control ensures that the load on the welding pin (19) is relieved, as a result of which elastic spring-back of the welding pin (19) is achieved.

## Revendications

1. Dispositif destiné à éviter une interruption du processus de soudage lors du soudage par friction malaxage, notamment une rupture du pion de friction, comprenant
a) une cloche d'outil (7) cunéiforme, un cône d'attachement d'outil (28), un patin de soudage (11) et une broche de soudage (19), la cloche d'outil (7) guidant la broche de soudage (19) au moyen du cône d'attachement d'outil (28) et du patin de soudage (11),
b) un pointage de cône dans la zone inférieure du cône d'attachement d'outil (28), qui sert à accueillir un capteur (22) destiné à détecter la force axiale, le couple et le moment de flexion au niveau de la broche de soudage (19),
c) un système de positionnement vertical piézoélectrique pour la broche de soudage (19),
d) un amplificateur de signal de capteur (23) comprenant une antenne à rotor servant à la réception, à l'amplification et à la retransmission de toutes les valeurs mesurées acquises, ces valeurs mesurées étant retransmises à une commande de machine par une antenne statique (16), et
e) un système d'alimentation électrique inductif destiné à alimenter le système de mesure à partir d'un enroulement secondaire (24) en mouvement et d'un enroulement primaire (25) statique,
**caractérisé en ce que**
au moins trois capteurs (8) en forme de bande, orientés selon un angle de 120 degrés les uns par rapport aux autres, sont disposés sur les côtés longs de la cloche d'outil (7) cunéiforme en vue de déterminer la force, la pression et la course, et un capteur de mesure à laser (10) est disposé dans la zone du patin de soudage (11), dont la directivité balaye un trou tond (27) accueillant la broche de soudage (19) dans la zone de traversée de la pointe de broche (12), un capteur de bruits aériens (30) étant disposé à l'opposé du capteur de mesure à laser (10) et un capteur de température de patin de soudage étant présent.

2. Dispositif selon la revendication 1, **caractérisé en ce qu'**un capteur de bruit de structure (29), qui est dirigé avec sa directivité dans la zone entre la broche de soudage (19) et le patin de soudage (11), est installé dans la zone de l'extrémité supérieure d'un écrou d'accouplement (9) qui maintient la cloche d'outil (7) sur l'axe central de la tête de soudage par friction.

3. Dispositif selon l'une des revendications précédentes, **caractérisé en ce qu'**un capteur à courant de Foucault (31) est utilisé pour mesurer une distance entre la broche de soudage (19) et le bord intérieur du patin de soudage (11), celui-ci étant disposé transversalement par rapport à la direction de soudage.

4. Dispositif selon l'une des revendications précédentes, **caractérisé par** un capteur de température destiné à détecter la température du patin de soudage (11) .

5. Procédé destiné à éviter une interruption du processus de soudage lors du soudage par friction malaxage, notamment une rupture du pion de friction, avec un dispositif selon l'une des revendications 1 à 4, comprenant les étapes suivantes :
a) détermination de la force, de la pression et de la course de la cloche d'outil (7) qui tourne et qui guide la broche de soudage (19) au moyen des capteurs (8) en forme de bande,
b) détection de la force axiale, du couple et du moment de flexion au niveau de la broche de soudage (19) au moyen du capteur (22) disposé au niveau du pointage de cône dans la zone inférieure du cône d'attachement d'outil (28), et
c) détection de la flexion et de la température de la broche de soudage (19),
une régulation de machine veillant à un soulagement de la broche de soudage (19) en fonction d'une force individuelle respective au niveau de la pointe de broche de soudage (12) et à l'intérieur d'un intervalle de temps prédéterminé, moyennant quoi un retour élastique de la broche de soudage (19) est obtenu.
